(19) Europäisches Patentamt / European Patent Office / Office européen des brevets

(11) **EP 4 297 221 A1**

(12) **EUROPEAN PATENT APPLICATION**

(43) Date of publication:
**27.12.2023 Bulletin 2023/52**

(21) Application number: **23178262.4**

(22) Date of filing: **08.06.2023**

(51) International Patent Classification (IPC):
**H02J 1/12** (2006.01)   **B60L 58/30** (2019.01)
**H01M 8/24** (2016.01)

(52) Cooperative Patent Classification (CPC):
**H02J 1/12; B60L 58/30;** B60L 50/71; H01M 8/24;
H01M 2250/10; H01M 2250/20; H02J 2300/30;
H02J 2310/40

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **10.06.2022   US 202263351094 P**

(71) Applicant: **Hydrogenics Corporation
Mississauga, ON L5T 2N6 (CA)**

(72) Inventors:
• **Zaag, Nader**
  **L9T 6X4 Milton (CA)**
• **Sorbera, Sonia**
  **L4H 0X6 Woodbridge (CA)**
• **Joos, Nathaniel Ian**
  **MP 1N7 Toronto (CA)**
• **Poon, John Yui Ki**
  **L4J 8H1 Thornhill (CA)**

(74) Representative: **Bryer, Pamela Ruth
Marks & Clerk LLP
40 Torphichen Street
Edinburgh EH3 8JB (GB)**

(54) **DYNAMIC CONTROL OF PARALLEL CONNECTED FUEL CELL SYSTEMS**

(57)    The present disclosure generally relates to systems and methods for operating a fuel cell system including at least two or more fuel cell systems that are connected in a parallel configuration.

*FIG. 1A*

EP 4 297 221 A1

**Description**

**TECHNICAL FIELD**

The present disclosure generally relates to systems and methods for powering a load by utilizing at least two or more fuel cell systems that are connected in a parallel configuration.

**BACKGROUND**

Vehicles and/or powertrains use fuel cells or fuel cell stacks for their power needs. A fuel cell and fuel cell stack may include, but are not limited to a phosphoric acid fuel cell (PAFC), a molten carbonate fuel cell (MCFC), a proton exchange membrane fuel cell, also called a polymer exchange membrane fuel cell (PEMFC), or a solid oxide fuel cell (SOFC).

A fuel cell or fuel cell stack may generate electricity in the form of direct current (DC) from electro-chemical reactions that take place in the fuel cell or fuel cell stack to power various applications.

Optimal use of a plurality of fuel cell systems comprising one or more fuel cell stacks increases efficiency and the power available to various applications. The plurality of the fuel cell systems may be configured in a series, a parallel, or a mixed configuration when powering the various applications. The present disclosure provides systems and methods for optimizing the operation of a plurality of fuel cell systems in a parallel configuration. The present disclosure provides systems and methods to determine when to initiate the operation of each of the plurality of fuel cell systems in a parallel configuration depending on a load power ($P_{load}$) required by the various applications.

**SUMMARY**

Embodiments of the present disclosure are included to meet these and other needs.

In one aspect, described herein, a parallel configured system comprises a plurality of fuel cell systems, a switching device, an energy conversion device, a load, and a control unit. The plurality of fuel cell systems are electrically connected in a parallel configuration. The switching device is connected in series to each of the plurality of the fuel cell systems. The energy conversion device is connected in series to each of the switching devices. The load is connected to each of the energy conversion devices. The control unit is configured to determine an operation of the plurality of the fuel cell systems. An electrical output of the plurality of the fuel cell systems is connected in parallel to the load through the switching devices and the energy conversion devices.

In some embodiments, the load may be a motor controller for an electric vehicle or an inverter for a stationary power application. In some embodiments, the switching device may be a contactor, a MOSFET, an IGBT, or a bipolar junction transistor. In some embodiments, the energy conversion device may be a DC-DC converter.

In some embodiments, a ranking system for each of the plurality of the fuel cell systems may be determined while each of the plurality of the fuel cell systems is not providing power, and the ranking system may be used to determine a preferred order of connection and disconnection of each of the plurality of the fuel cell systems based on a weighted averaging scheme of one or more factors. In some embodiments, the one or more factors may include availability of each of the plurality of the fuel cell systems, frequency of faults, alarms, or recoveries that the control unit has identified in each of the plurality of the fuel cell systems, or operating hours of each of the plurality of the fuel cell systems.

In some embodiments, predefined power levels may be identified for turning on and turning off each of the plurality of the fuel cell system based on a required power of the load. In some embodiments, the predefined power levels identified for turning on and turning off each of the plurality of the fuel cell systems may be dynamically adjusted based on historical operating data of each of the plurality of the fuel cell systems.

In some embodiments, the parallel configured system may have a minimum power setting and a maximum power setting, and the operation of each of the plurality of the fuel cell systems may be based on a range between the minimum power setting and the maximum power setting. In some embodiments, the parallel configured system may further comprise an end system integrator implemented to determine which of the plurality of the fuel cell systems should be turned on. In some embodiments, the end system integrator may model for any time delay incurred in turning on each of the plurality of the fuel cell systems.

According to a second aspect, described herein, a method for providing power to a load comprises implementing a plurality of fuel cell systems electrically connected in a parallel configuration, connecting each of the plurality of the fuel cell systems to a switching device in series, connecting each of the switching devices to an energy conversion device in series, connecting a load to each of the energy conversion devices, and implementing a control unit to determine operation of the plurality of the fuel cell systems. An electrical output of the plurality of the fuel cell systems is connected in parallel to the load through the switching devices and the energy conversion devices.

In some embodiments, the load may be a motor controller for an electric vehicle or an inverter for a stationary power application. In some embodiments, the switching device may be a contactor, a MOSFET, an IGBT, or a bipolar junction transistor. In some embodiments, the energy conversion device may be a DC-DC converter.

In some embodiments, the method may further comprise determining a ranking system for each of the plurality of the fuel cell systems while each of the plurality of the fuel cell systems is not providing power, and using the ranking system to determine a preferred order of connection and disconnection of each of the plurality of the fuel cell systems based on a weighted averaging scheme of one or more factors. In some embodiments, the one or more factors may include an availability of each of the plurality of the fuel cell systems, frequency of faults, alarms, or recoveries that the control unit has identified in each of the plurality of the fuel cell systems, or operating hours of each of the plurality of the fuel cell systems.

In some embodiments, the method may further comprise identifying predefined power levels for turning on and turning off each of the plurality of the fuel cell system based on a required power of the load. In some embodiments, the method may further comprise implementing an end system integrator to determine which of the plurality of the fuel cell systems should be turned on.

In some embodiments, the method may further comprise using the end system integrator to model for any time delay incurred in turning on each of the plurality of the fuel cell systems.

At least some of the above and other features of the invention are set out in the claims.

## BRIEF DESCRIPTION OF THE DRAWINGS

These and other features, aspects, and advantages of the present invention will become better understood when the following detailed description is read with reference to the accompanying drawings, in which like characters represent like parts throughout the drawings, wherein:

FIG. 1A is a schematic view of an exemple fuel cell system including an air delivery system, a hydrogen delivery system, and a fuel cell module including a stack of multiple fuel cells;

FIG. 1B is a cutaway view of an exemple fuel cell system including an air delivery system, hydrogen delivery systems, and a plurality of fuel cell modules each including multiple fuel cell stacks;

FIG. 1C is a perspective view of an exemple repeating unit of a fuel cell stack of the fuel cell system of FIG. 1A;

FIG. 1D is a cross-sectional view of an exemple repeating unit of the fuel cell stack of FIG. 1C;

FIG. 2 is an illustration of N connected fuel cell systems, each with its own contactor and DC-DC converter, and which are connected in a parallel configuration;

FIG. 3 is an illustration of "turning on" power transition points ($P_{on}$) and "turning off" power transition points ($P_{off}$) implemented when operating each fuel cell system of FIG. 2; and

FIG. 4 illustrates an embodiment of a method implemented to determine the operation of the fuel cell systems of FIG. 2.

## DETAILED DESCRIPTION

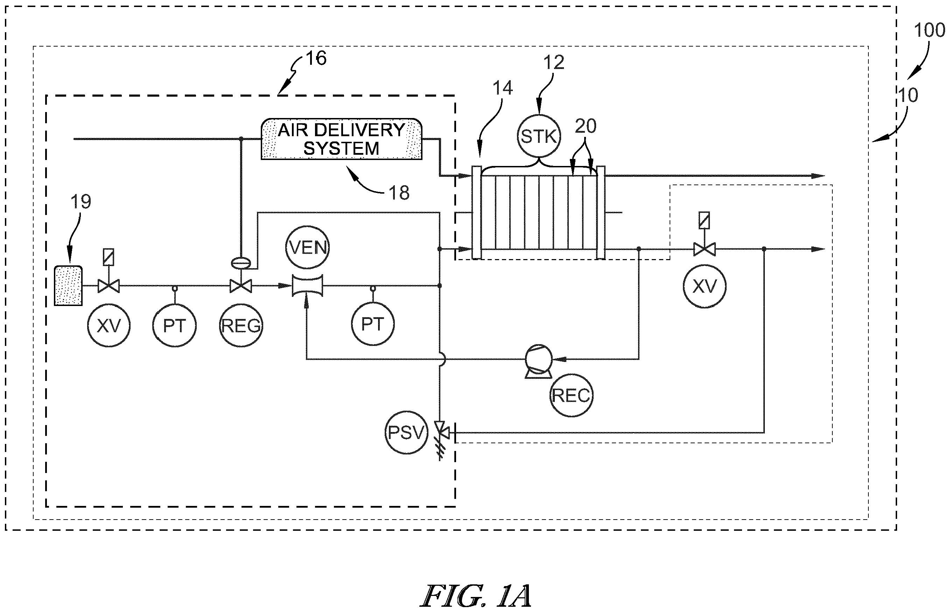

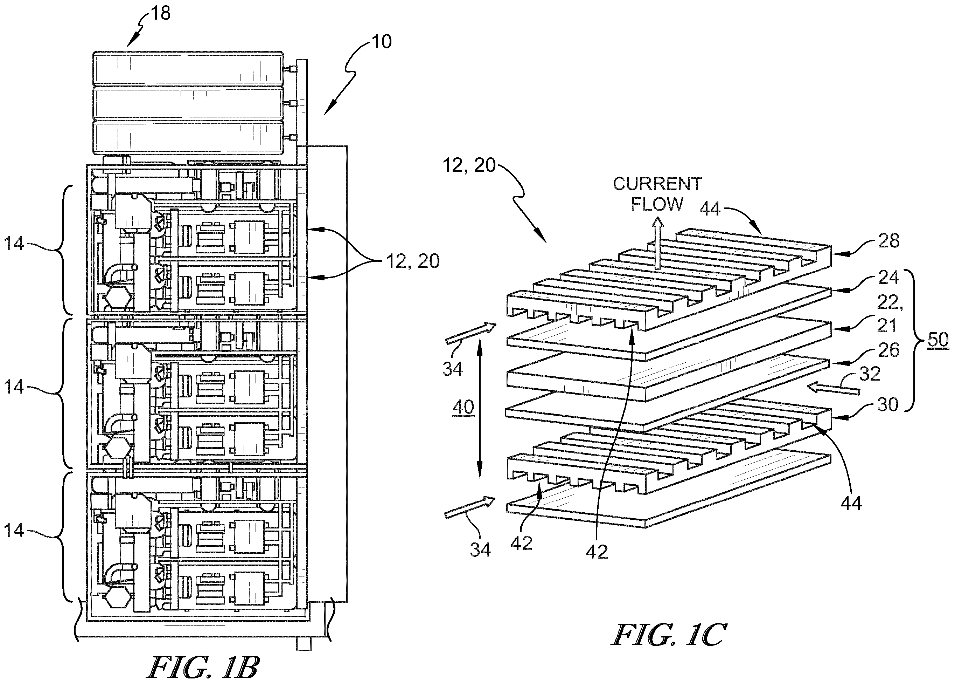

As shown in **FIG. 1A,** fuel cell systems **10** often include one or more fuel cell stacks **12** or fuel cell modules **14** connected to a balance of plant (BOP) **16,** including various components, to support the electrochemical conversion, generation, and/or distribution of electrical power to help meet modern day industrial and commercial needs in an environmentally friendly way. As shown in **FIGS. 1B** and **1C,** fuel cell systems **10** may include fuel cell stacks **12** comprising a plurality of individual fuel cells **20.** Each fuel cell stack **12** may house a plurality of fuel cells **20** assembled together in series and/or in parallel. The fuel cell system **10** may include one or more fuel cell modules **14** as shown in **FIGS. 1A** and **1B.**

Each fuel cell module **14** may include a plurality of fuel cell stacks **12** and/or a plurality of fuel cells **20.** The fuel cell module **14** may also include a suitable combination of associated structural elements, mechanical systems, hardware, firmware, and/or software that is employed to support the function and operation of the fuel cell module **14.** Such items include, without limitation, piping, sensors, regulators, current collectors, seals, and insulators.

The fuel cells **20** in the fuel cell stacks **12** may be stacked together to multiply and increase the voltage output of a single fuel cell stack **12.** The number of fuel cell stacks **12** in a fuel cell system **10** can vary depending on the amount of power required to operate the fuel cell system **10** and meet the power need of any load. The number of fuel cells **20** in a fuel cell stack **12** can vary depending on the amount of power required to operate the fuel cell system **10** including the fuel cell stacks **12.**

The number of fuel cells **20** in each fuel cell stack **12** or fuel cell system **10** can be any number. For example, the number of fuel cells **20** in each fuel cell stack **12** may range from about 100 fuel cells to about 1000 fuel cells, including any specific number or range of number of fuel cells **20** comprised therein (e.g., about 200 to about 800). In an embodiment, the fuel cell system **10** may include about 20 to about 1000 fuel cells stacks **12,** including any specific number or range of number of fuel cell stacks **12** comprised therein (e.g., about 200 to about 800). The fuel cells **20** in the fuel cell stacks **12** within the fuel cell module **14** may be oriented in any direction to optimize the operational efficiency and functionality of the fuel cell system **10.**

The fuel cells **20** in the fuel cell stacks **12** may be any type of fuel cell **20.** The fuel cell **20** may be a polymer electrolyte membrane or proton exchange membrane (PEM) fuel cell, an anion exchange membrane fuel cell (AEMFC), an alkaline fuel cell (AFC), a molten carbonate fuel cell (MCFC), a direct methanol fuel cell (DMFC), a regenerative fuel cell (RFC), a phosphoric acid fuel cell (PAFC), or a solid oxide fuel cell (SOFC). In an exemple embodiment, the fuel cells **20** may be a polymer electrolyte membrane or proton exchange membrane (PEM) fuel cell or a solid oxide fuel cell (SOFC).

In an embodiment shown in **FIG. 1C,** the fuel cell stack **12** includes a plurality of proton exchange membrane (PEM) fuel cells **20.** Each fuel cell **20** includes a single membrane electrode assembly (MEA) **22** and a gas diffusion layers (GDL) **24, 26** on either or both sides of the membrane electrode assembly (MEA) **22** (see **FIG. 1C**). The fuel cell **20** further includes a bipolar plate (BPP) **28, 30** on the external side of each gas diffusion layers (GDL) **24, 26,** as shown in **FIG. 1C.** The above-mentioned components, in particular the bipolar plate **30,** the gas diffusion layer (GDL) **26,** the membrane electrode assembly (MEA) **22,** and the gas diffusion layer (GDL) **24** comprise a single repeating unit **50.**

The bipolar plates (BPP) **28, 30** are responsible for the transport of reactants, such as fuel **32** (e.g., hydrogen) or oxidant **34** (e.g., oxygen, air), and cooling fluid **36** (e.g., coolant and/or water) in a fuel cell **20.** The bipolar plates (BPP) **28, 30** can uniformly distribute reactants **32, 34** to an active area **40** of each fuel cell **20** through oxidant flow fields **42** and/or fuel flow fields **44** formed on outer surfaces of the bipolar plates (BPP) **28, 30.** The active area **40,** where the electrochemical reactions occur to generate electrical power produced by the fuel cell **20,** is centered, when viewing the stack **12** from a top-down perspective, within the membrane electrode assembly (MEA) **22,** the gas diffusion layers (GDL) **24, 26,** and the bipolar plate (BPP) **28,30.**

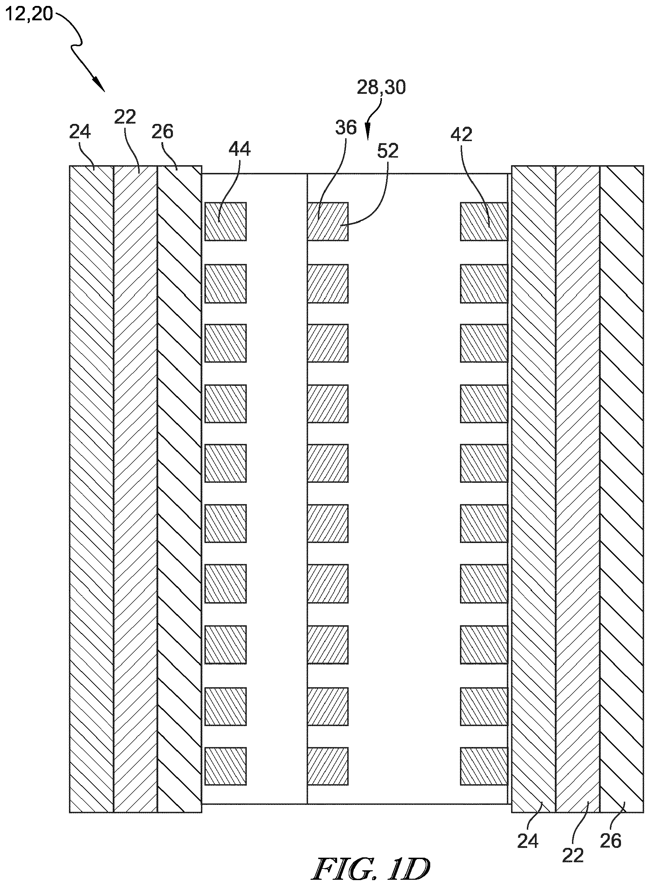

The bipolar plates (BPP) **28, 30** may each be formed to have reactant flow fields **42, 44** formed on opposing outer surfaces of the bipolar plate (BPP) **28, 30,** and formed to have coolant flow fields **52** located within the bipolar plate (BPP) **28, 30,** as shown in **FIG. 1D.** For example, the bipolar plate (BPP) **28, 30** can include fuel flow fields **44** for transfer of fuel **32** on one side of the plate **28, 30** for interaction with the gas diffusion layer (GDL) **26,** and oxidant flow fields **42** for transfer of oxidant **34** on the second, opposite side of the plate **28, 30** for interaction with the gas diffusion layer (GDL) **24.** As shown in **FIG. 1D,** the bipolar plates (BPP) **28, 30** can further include coolant flow fields **52** formed within the plate (BPP) **28, 30,** generally centrally between the opposing outer surfaces of the plate (BPP) **28, 30.** The coolant flow fields **52** facilitate the flow of cooling fluid **36** through the bipolar plate (BPP) **28, 30** in order to regulate the temperature of the plate (BPP) **28, 30** materials and the reactants. The bipolar plates (BPP) **28, 30** are compressed against adjacent gas diffusion layers (GDL) **24, 26** to isolate and/or seal one or more reactants **32, 34** within their respective pathways **44, 42** to maintain electrical conductivity, which is required for robust operation of the fuel cell **20** (see **FIGS. 1C** and **1D**).

The fuel cell system **10** described herein, may be used in stationary and/or immovable power system, such as industrial applications and power generation plants. The fuel cell system **10** may also be implemented in conjunction with an air delivery system **18.** Additionally, the fuel cell system **10** may also be implemented in conjunction with a hydrogen delivery system and/or a source of hydrogen **19** such as a pressurized tank, including a gaseous pressurized tank, cryogenic liquid storage tank, chemical storage, physical storage, stationary storage, an electrolysis system, or an electrolyzer. In one embodiment, the fuel cell system **10** is connected and/or attached in series or parallel to a hydrogen delivery system and/or a source of hydrogen **19,** such as one or more hydrogen delivery systems and/or sources of hydrogen **19** in the BOP **16** (see **FIG. 1A**). In another embodiment, the fuel cell system **10** is not connected and/or attached in series or parallel to a hydrogen delivery system and/or a source of hydrogen **19.**

The present fuel cell system **10** may also be comprised in mobile applications. In an exemple embodiment, the fuel cell system **10** is in a vehicle and/or a powertrain **100.** A vehicle **100** comprising the present fuel cell system **10** may be an automobile, a pass car, a bus, a truck, a train, a locomotive, an aircraft, a light duty vehicle, a medium duty vehicle, or a heavy-duty vehicle. Type of vehicles **100** can also include, but are not limited to commercial vehicles and engines, trains, trolleys, trams, planes, buses, ships, boats, and other known vehicles, as well as other machinery and/or manufacturing devices, equipment, installations, among others.

The vehicle and/or a powertrain **100** may be used on roadways, highways, railways, airways, and/or waterways. The vehicle **100** may be used in applications including but not limited to off highway transit, bobtails, and/or mining equipment. For example, an exemple embodiment of mining equipment vehicle **100** is a mining truck or a mine haul truck.

In addition, it may be appreciated by a person of ordinary skill in the art that the fuel cell system **10,** fuel cell stack **12,** and/or fuel cell **20** described in the present disclosure may be substituted for any electrochemical system, such as an electrolysis system (e.g., an electrolyzer), an electrolyzer stack, and/or an electrolyzer cell (EC), respectively. As such, in some embodiments, the features and aspects described and taught in the present disclosure regarding the fuel cell system **10,** stack **12,** or cell **20** also relate to an electrolyzer, an electrolyzer stack, and/or an electrolyzer cell (EC). In further embodiments, the features and aspects described or taught in the present disclosure do not relate, and are therefore distinguishable from, those of an electrolyzer, an electrolyzer stack, and/or an electrolyzer cell (EC).

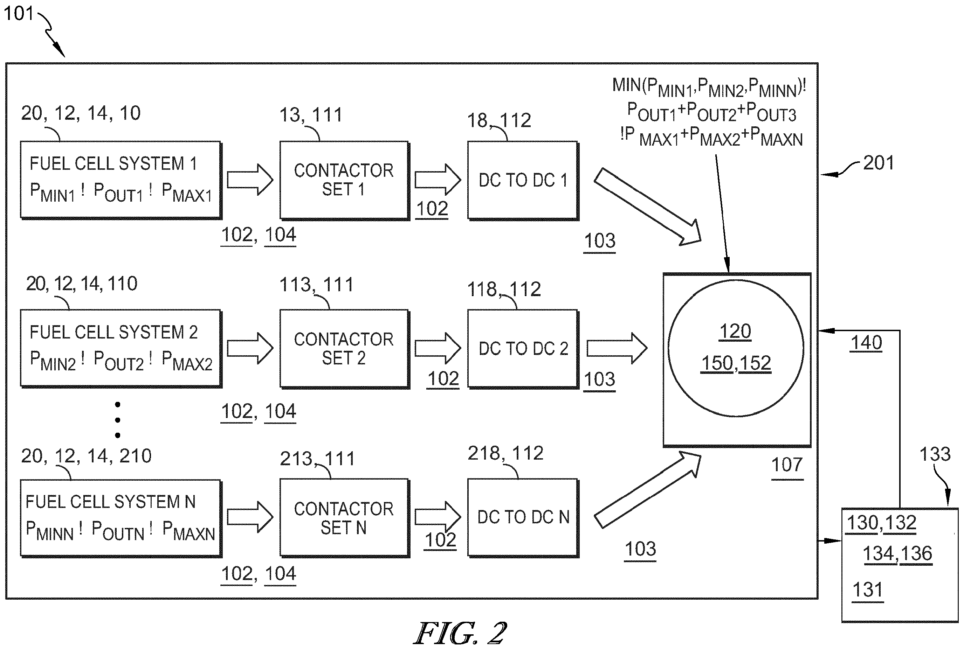

As shown in **FIG. 1C,** the fuel cell **20** produces electricity by electrochemically combining hydrogen **32** and oxygen **34** across a catalyst layer **21.** As shown in **FIG. 2,** one or more fuel cell systems **10, 110, 210** comprising one or more fuel cells **20,** or fuel cell stacks **12** are interconnected in a parallel configured system **101.** A plurality of elements (e.g., fuel cells **20,** fuel cell modules **14,** or fuel cell stacks **12**) are connected in series to form each of the fuel cell systems **10, 110, 210.** Fuel cells **20,** fuel cell modules **14,** or fuel cell stacks **12** are interconnected in a series configuration to increase the output voltage while fuel cells **20,** fuel cell modules **14,** or fuel cell stacks **12** are interconnected in a parallel configuration to increase the output current. In other embodiments, the plurality of fuel cells **20,** fuel cell modules **14,** or fuel cell stacks **12** may be connected in parallel to form the fuel cell systems **10, 110, 210.**

By incorporating a switching device **111,** such as a contactor **13, 113, 213,** and an energy conversion device **112,** such as a DC-DC converter **18, 118, 218,** in a parallel configuration to a load **120,** operation of each fuel cell **20** or fuel cell stack **12** in the fuel cell systems **10, 110, 210** can be controlled. Each switching device **111** is connected in series with each of the fuel cell systems **10, 110, 210.** Each energy conversion device **112** is connected in series with the each switching device **111.** The operation of each fuel cell **20** or fuel cell stack **12** is based on the load **120,** which may vary with time and/or application.

The process of converting hydrogen **32** to electricity results in a direct current (DC). As shown in **FIG. 2,** the parallel configured system **101** includes fuel cell systems **10, 110, 210** that are utilized to produce direct current **102.** The fuel cell systems **10, 110, 210** without any further power conditioning produce DC energy governed by a polarization curve. The fuel cell systems **10, 110, 210** utilize the energy conversion device **112,** such as the DC-DC converter **18, 118, 218,** to convert the fuel cell **20** produced current **102** into a voltage **107** and a current **103** that can be supplied to the load **120.** The load **120** operates by utilizing the current **103** from each of the DC-DC converters **18, 118, 218** to produce an alternating current (AC) voltage **107.** Thus, the current **103** from each DC-DC converter **18, 118, 218** is combined to drive the load **120.**

In some embodiments, as shown in **FIG. 2,** the same amount of current **103** is produced by each of the fuel cell systems **10, 110, 210.** In other embodiments, the current **103** produced by each fuel cell system **10, 110, 210** may be different. In some embodiments, the current **103** may be converted to AC voltage **107** before reaching the load **120.** Each fuel cell system **10, 110, 210** may have a range of allowable power outputs. The power output ranges of the fuel cell systems **10, 110, 210** may be established by the manufacturer of the system **10, 110, 210.** The power output ranges of the fuel cell systems **10, 110, 210** may be similar or different from each other. The components of the fuel cell systems **10, 110, 210** are designed to optimize operational efficiency and performance of the parallel configured system **101.**

Significant analysis of the load **120** is typically conducted prior to determining the exact configuration of the fuel cell system **10, 110, 210,** or multiples thereof. The present disclosure provides systems and methods to determine initiation and/or operation of each fuel cell **20** or fuel cell stack **12** in the fuel cell systems **10, 110, 210** in the parallel configured system **101** depending on a load power ($P_{load}$) required by the load **120.** More specifically, the present disclosure relates to determining if the operation of each component of the fuel cell system **10, 110, 210** varies with time and/or is dynamic. The decision of when to initiate the operation of each fuel cell **20** or fuel cell stack **12** in the fuel cell systems **10, 110, 210** in the parallel configured system **101** may be optimized based on fuel cell **20** or fuel cell stack **12** availability, efficiency, performance, and/or lifetime.

The sizing of the fuel cell system **10, 110, 210** may be based on power, voltage, and/or current considerations of the load **120.** The load **120** may be a motor controller **150** for an electric vehicle **100** or an inverter **152** for a stationary powertrain **100.** Alternatively, the load **120** may be any other application requiring electric power. In an illustrative embodiment, in **FIG. 2,** there is any number (N) of connected fuel cell systems **10, 110, 210.**

The number or fuel cell systems **10, 110, 210** may range from about 1 to about 200, including any number or range comprised therein. For example, the any number (N) of connected fuel cell systems **10, 110, 210** may range from 1 to 5, from 5 to 10, from 10 to 20, from 20 to 50, from 50 to 100, or from 100 to 200, including any number or range comprised therein. In some embodiments, any number (N) of connected fuel cell systems **10, 110, 210** in the parallel configured system **101** may be more than 200.

The product of current and voltage determines the power available from the fuel cell system **10, 110, 210.** Thus, the power available to operate the load **120** depends on the number (N) of fuel cell systems **10, 110, 210** being operated in the parallel configured system **101.** Additionally, the parallel configured system **101** may be designed to ensure that the load **120** can continue to operate even if one or more of the fuel cell system(s) **10, 110, 210** has faulted and/or is not operational.

Each fuel cell system **10, 110, 210** is associated with its own switching device **111** and its own energy conversion device **112.** The switching device **111** and the energy conversion device **112** are also connected in a parallel configuration. The switching device **111** may be a MOSFET, an IGBT, a bipolar junction transistor, or a dedicated contactor **13,113, 213.** The energy conversion device **112** may be a DC-DC converter **18, 118, 218.**

As shown in **FIG. 2,** the parallel configured system **101** is included in a fuel cell engine **201** and includes a controller **133.** The contactor(s) **13, 113, 213** are coupled electrically to allow for bypass or connection to each fuel cell systems **10, 110, 210.** A decision as to whether each fuel cell system **10, 110, 210** is bypassed, disconnected, and/or switched on is based on a sensory feedback loop **140.** The sensory feedback loop **140** is an input into a finite state machine and fault management process **131** (e.g., an algorithm) that is embedded within the fuel cell controller **133.** A decision as to whether each fuel cell system **10, 110, 210** is bypassed is based on the ability of the remaining fuel cell systems **10, 110, 210** within the parallel configured system **101** to provide continuous, uninterrupted flow of current to the load **120.**

The allowable power output of any one of the fuel cell systems **10, 110, 210** ranging from 1 to N may be in the range of about $P_{mini}$ to about $P_{maxi}$, where i ranges from 1 to N. Maximum power output from the fuel cell system **10, 110, 210** is $P_{maxi}$. Minimum power output from the fuel cell system **10, 110, 210** is $P_{mini}$. Maximum available power output of the parallel configured system **101** is the sum of the maximum power available from each of the fuel cell systems **10, 110, 210** ($P_{maxi}$s). Minimum power available of the parallel configured system **101** is the minimum of the minimum power available from each of the fuel cell systems **10, 110, 210** ($P_{mini}$s). Thus, the maximum and minimum available power of the parallel configured system **101** depends on the number of operational fuel cell systems **10, 110, 210.**

The allowable operating range of the parallel configured system **101** is:

$$\mathrm{MIN}(P_{min1}, P_{min2}, P_{minN}) \leq P_{out1} + P_{out2} + P_{out3} \leq P_{max1} + P_{max2} + P_{maxN}$$

The DC-DC converter **18, 118, 218** combines the outputs (e.g., current **103**) of each of the fuel cell systems **10, 110, 210** in the parallel configured system **101.** The ability to combine the outputs (e.g., current **103**) of each of the fuel cell systems **10, 110, 210** enables the parallel fuel cell system configuration **101** to produce more power compared to an implementation without DC-DC converters **18, 118, 218.** Since the fuel cell systems **10, 110, 210** are configured in parallel, the output voltages **104** of the fuel cell systems **10, 110, 210** must align when delivering power in the absence of the DC-DC converters **18,118, 218.** Thus, it may not be possible to achieve the maximum power output of all N fuel cell systems **10, 110, 210** unless each system **10, 110, 210** has the same voltage in the absence of the DC-DC converter **18, 118, 218.**

Additionally, in the event that one of the parallel connected fuel cell systems **10, 110, 210** in the parallel configured system **101** faults, the DC-DC **18, 118, 218** will be located in between the faulted fuel cell system **10, 110, 210** and the other operational fuel cell systems **10, 110, 210** such that the parallel configured system **101** can continue to deliver power to the load **120.** A system control architecture **130** is embedded within a fuel cell main control unit **132** or as part of an external monitoring control system **134** or database master **136** in the parallel configured system **101** to ensure continuous power is provided to the load **120.**

Additionally, the determination of when and which fuel cells systems **10, 110, 210** are enabled is optimized based on a time varying load requirement. **Table 1** illustrates an embodiment of an analysis process that is implemented by the system control architecture **130.** The system control architecture **130** is embedded within the fuel cell main control unit **132,** as part of the external monitoring control system **134,** or as the database master **136** capable of bidirectional communications with the parallel configured system **101.**

The control unit **132** tracks several factors to determine the sequence of operating the one or more fuel cell systems **10, 110, 210.** The factors may include, but are not limited to, a determination of any prevalent conditions of each fuel cell system **10, 110, 210** that potentially limit the ability of the fuel cell system **10, 110, 210** to provide power (e.g., availability of fuel cell system **10, 110, 210**), frequency of faults, alarms, or recoveries that the control unit **132** has identified in the fuel cell system **10, 110, 210,** and/or operating hours of each fuel cell system **10, 110, 210.** The control unit **132** may implement an algorithm that weighs each of the factors and determine a selection order for operating the fuel cell systems **10, 110, 210** in the parallel configured system **101.**

**Table 1**

| Fuel Cell System | Availability of Series Elements (e.g., fuel cell stacks **12**) | Recovery State | Operating Hour Score | Combined Ranking |
|---|---|---|---|---|
| 1 (e.g., fuel cell system **10**) | $A_1$ | $R_1$ | $H_1$ | $P_1 = W_A * A_1 + W_R * R_1 + W_H * H_1$ |

(continued)

| Fuel Cell System | Availability of Series Elements (e.g., fuel cell stacks 12) | Recovery State | Operating Hour Score | Combined Ranking |
|---|---|---|---|---|
| 2 (e.g., fuel cell system 110) | $A_2$ | $R_2$ | $H_2$ | $P_2 = W_A * A_2 + W_R * R_2 + W_H * H_2$ |
| N (e.g., fuel cell system 210) | $A_N$ | $R_N$ | $H_N$ | $P_N = W_A * A_N + W_R * R_N + W_H * H_N$ |

$W_A$ is the weight applied to the availability of each element (e.g., fuel cell stack 12) in each fuel cell system 1 to N. $W_R$ is the weight applied to recoveries or performance of each element (e.g., fuel cell stack 12) in each fuel cell system 1 to N. $W_H$ is the weight applied to operating hours of each element (e.g., fuel cell stack 12) in each fuel cell system 1 to N.

Any change in the selection order for operating the fuel cell system 10, 110, 210 results in a contactor 13, 113, 213 switching event. To limit the number of contactor 13, 113, 213 switching events that occur while the fuel cell systems 10, 110, 210 are providing power, the determination of a selection order may only occur while the parallel configured system 101 is not providing power to the load 120. When the parallel configured system 101 starts providing power to the load 120, the fuel cell systems 10, 110, 210 that are on or online and the fuel cell systems 10, 110, 210 that are off or offline are identified based on the determined selection order.

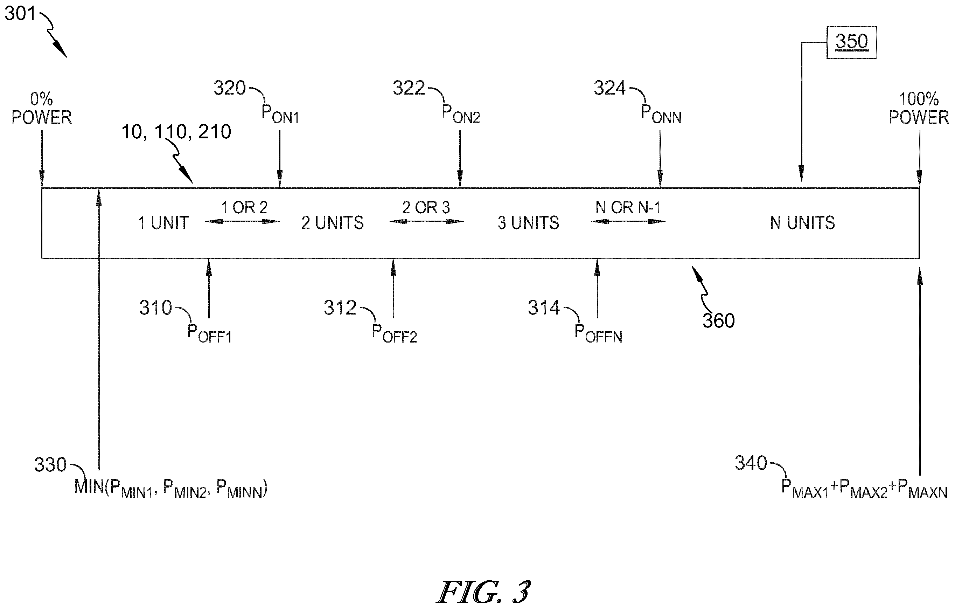

Power transition points may be defined or determined for each load 120. As shown in FIG. 3, the power transition points are transition points when the parallel configured system 101 transitions from operating one set of the fuel cell systems 10, 110, 210 to another set of the fuel cell systems 10, 110, 210 while providing power to the load 120. There may be one or more transition points associated with each load 120. In some embodiments, there may be N-1 power transition points ($P_{ON(N-1)}$) or "turning on" power transition points for bringing additional fuel cells systems 10, 110, 210 online, depending on the number (N) of fuel cell systems 10, 110, 210. Additionally, or alternatively, it may also be desirable to define different power transition points for bringing one or more fuel cell systems 10, 110, 210 offline. Thus, there may be an additional N-1 power transition points ($P_{OFF(N-1)}$) or "turning off" power transition points associated with turning off the fuel cell systems 10, 110, 210.

The "turning off" power transition points ($P_{OFF(N-1)}$) for each fuel cell systems 10, 110, 210 may be a lower power level than the counterpart "turning on" power transition points ($P_{ON(N-1)}$) such that there is hysteresis embedded in the enabling and disabling of each fuel cell system 10, 110, 210. There may not be any induced nuisance switching that occurs during the transitions from turning on to turning off and vice versa. Table 2 illustrates an embodiment for determining or defining the "turning on" power transition points to bring one or more fuel cell system 1-N (e.g., fuel cell systems 10, 110, 210) online.

**Table 2**

| Load Power | Number of Fuel Cell Systems Enabled |
|---|---|
| < MIN ($P_{min1}$, $P_{min2}$, $P_{minN}$) | 0 |
| ≥ MIN (($P_{min1}$, $P_{min2}$, $P_{minN}$) < $P_{ON1}$ | 1 |
| ≥ $P_{ON1}$ < $P_{ON2}$ | 2 |
| ≥ $P_{ON2}$ < $P_{ON(N-1)}$ | 3 |
| ≥ $P_{ON(N-1)}$ | N |

$P_{ON1}$ is the defined power transition point when the parallel configured system 101 transitions from operating one (1) to two (2) fuel cell systems. $P_{OFF1}$ is the defined power transition point when the parallel configured system 101 transitions from operating two (2) to one (1) fuel cell system. $P_{ON2}$ is the defined power transition point when the parallel configured system 101 transitions from operating two (2) to three (3) fuel cell systems. $P_{OFF2}$ is the defined power transition point when the parallel configured system 101 transitions from operating three (3) to two (2) fuel cell systems.

$P_{ON(N-1)}$ is the defined power transition point when the parallel configured system **101** transitions from operating N-1 fuel cell systems to N fuel cell systems. $P_{OFF(N-1)}$ is the defined power transition point when the parallel configured system **101** transitions from operating N fuel cell systems to N-1 fuel cell systems.

**FIG. 3** illustrates a method **301** for operating the different fuel cell systems **10, 110, 210 in** the parallel configured system **101**. As shown in **FIG. 3,** the determination of the "turning on" power transition points ($P_{on}$) **320, 322, 324** and the "turning off" power transition points ($P_{off}$) **310, 312, 314** may be tuned for each load **120**. When the "turning on" power transition point ($P_{on}$) **320, 322, 324** or the "turning off" power transition point ($P_{off}$) **310, 312, 314** is zero, their impact on switching behavior of the fuel cell system **10, 110, 210** is eliminated. Consequently, the fuel cell systems **10, 110, 210** only adhere to operational limits determined by a minimum power setting $P_{min}$ **330** and a maximum power setting $P_{max}$ **340** settings for the parallel configured system **101**.

By increasing a range **360** between the minimum power setting $P_{min}$ **330** and maximum power setting $P_{max}$ **340** settings, an end system integrator **350** can be implemented to determine which fuel cell systems **10, 110, 210** to turn on. Additionally, for exceptionally dynamic load **120,** the integrator **350** may also model for any time delay in turning on each fuel cell system **10, 110, 210**.

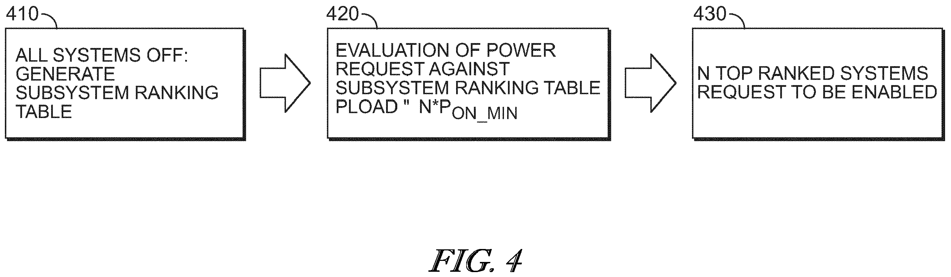

**FIG. 4** illustrates an embodiment of a method implemented to determine the operation of the fuel cell systems **10, 110, 210** in the parallel configured system **101** shown in **FIG. 2**. The method includes determining if all the fuel cell systems **10, 110, 210** are turned off in step **410**. When all the fuel cell systems **10, 110, 210** are determined to be turned off, power request by the load **120** is evaluated based on a ranking table in step **420**. Based on the evaluation of the power request by the load **120,** a top ranked fuel cell system **10, 110, 210** is identified and enabled in step **430**. The ranking table may be based on predefined load **120** and/or power levels (e.g., "turning on" and "turning off" power transition points shown in **FIG. 3**). Such predefined load **120** and/or power levels may be used by the controller **133** to initiate the operation of one or more of the fuel cell systems **10, 110, 210**. The predefined load **120** and/or power levels may be identified based on database, maps, predictive algorithms, etc. The predefined load **120** and/or power levels may be dynamically adjusted based on historical operating data of the fuel cell systems **10, 110, 210**. Historical operating may include, but is not limited to operating limits associated with each of the fuel cell stacks **12** or fuel cells **20** in the fuel cell systems **10, 110, 210,** frequency of faults, alarms, or recoveries of the fuel cell systems **10, 110, 210,** and/or maximum and minimum power associated with the fuel cell systems **10, 110, 210**.

The following described aspects of the present invention are contemplated and nonlimiting:

A first aspect of the present invention relates to a parallel configured system. The parallel configured system comprises a plurality of fuel cell systems, a switching device, an energy conversion device, a load, and a system controller. The plurality of fuel cell systems are electrically connected in a parallel configuration. The switching device is connected in series to each of the plurality of the fuel cell systems. The energy conversion device is connected in series to each of the switching devices. The load is connected to each of the energy conversion devices. The system controller is configured to determine an operation of the plurality of the fuel cell systems. An electrical output of the plurality of the fuel cell systems is connected in parallel to the load through the switching devices and the energy conversion devices.

A second aspect of the present invention relates to a method for providing power to a load comprises. The method for providing power to a load comprises implementing a plurality of fuel cell systems electrically connected in a parallel configuration, connecting each of the plurality of the fuel cell systems to a switching device in series, connecting each of the switching devices to an energy conversion device in series, connecting a load to each of the energy conversion devices, and implementing a system controller to determine operation of the plurality of the fuel cell systems. An electrical output of the plurality of the fuel cell systems is connected in parallel to the load through the switching devices and the energy conversion devices.

In the first aspect of the present invention, the load may be a motor controller for an electric vehicle or an inverter for a stationary power application. In the first aspect of the present invention, the switching device may be a contactor, a MOSFET, an IGBT, or a bipolar junction transistor. In the first aspect of the present invention, the energy conversion device may be a DC-DC converter.

In the first aspect of the present invention, a ranking system for each of the plurality of the fuel cell systems may be determined while each of the plurality of the fuel cell systems is not providing power, and the ranking system may be used to determine a preferred order of connection and disconnection of each of the plurality of the fuel cell systems based on a weighted averaging scheme of one or more factors. In the first aspect of the present invention, the one or more factors may include availability of each of the plurality of the fuel cell systems, frequency of faults, alarms, or recoveries that the control unit has identified in each of the plurality of the fuel cell systems, or operating hours of each of the plurality of the fuel cell systems.

In the first aspect of the present invention, predefined power levels may be identified for turning on and turning off each of the plurality of the fuel cell system based on a required power of the load. In the first aspect of the present invention, the predefined power levels identified for turning on and turning off each of the plurality of the fuel cell systems may be dynamically adjusted based on historical operating data of each of the plurality of the fuel cell systems.

In the first aspect of the present invention, the parallel configured system may have a minimum power setting and a maximum power setting, and the operation of each of the plurality of the fuel cell systems may be based on a range between the minimum power setting and the maximum power setting. In the first aspect of the present invention, the parallel configured system may further comprise an end system integrator implemented to determine which of the plurality of the fuel cell systems should be turned on. In the first aspect of the present invention, the end system integrator may model for any time delay incurred in turning on each of the plurality of the fuel cell systems.

In the second aspect of the present invention, the load may be a motor controller for an electric vehicle or an inverter for a stationary power application. In the second aspect of the present invention, the switching device may be a contactor, a MOSFET, an IGBT, or a bipolar junction transistor. In the second aspect of the present invention, the energy conversion device may be a DC-DC converter.

In the second aspect of the present invention, the method may further comprise determining a ranking system for each of the plurality of the fuel cell systems while each of the plurality of the fuel cell systems is not providing power, and using the ranking system to determine a preferred order of connection and disconnection of each of the plurality of the fuel cell systems based on a weighted averaging scheme of one or more factors. In the second aspect of the present invention, the one or more factors may include an availability of each of the plurality of the fuel cell systems, frequency of faults, alarms, or recoveries that the control unit has identified in each of the plurality of the fuel cell systems, or operating hours of each of the plurality of the fuel cell systems.

In the second aspect of the present invention, the method may further comprise identifying predefined power levels for turning on and turning off each of the plurality of the fuel cell system based on a required power of the load. In the second aspect of the present invention, the method may further comprise implementing an end system integrator to determine which of the plurality of the fuel cell systems should be turned on.

In the second aspect of the present invention, the method may further comprise using the end system integrator to model for any time delay incurred in turning on each of the plurality of the fuel cell systems.

The features illustrated or described in connection with one example embodiment may be combined with any other feature or element of any other embodiment described herein. Such modifications and variations are intended to be included within the scope of the present disclosure. Further, a person skilled in the art will recognize that terms commonly known to those skilled in the art may be used interchangeably herein.

The above embodiments are described in sufficient detail to enable those skilled in the art to practice what is claimed and it is to be understood that logical, mechanical, and electrical changes may be made without departing from the scope of the claims. The detailed description is, therefore, not to be taken in a limiting sense.

As used herein, an element or step recited in the singular and proceeded with the word "a" or "an" should be understood as not excluding plural of said elements or steps, unless such exclusion is explicitly stated. Furthermore, references to "one embodiment" of the presently described subject matter are not intended to be interpreted as excluding the existence of additional embodiments that also incorporate the recited features. Specified numerical ranges of units, measurements, and/or values comprise, consist essentially or, or consist of all the numerical values, units, measurements, and/or ranges including or within those ranges and/or endpoints, whether those numerical values, units, measurements, and/or ranges are explicitly specified in the present disclosure or not.

Unless defined otherwise, technical and scientific terms used herein have the same meaning as is commonly understood by one of ordinary skill in the art to which this disclosure belongs. The terms "first," "second," "third" and the like, as used herein do not denote any order or importance, but rather are used to distinguish one element from another. The term "or" is meant to be inclusive and mean either or all of the listed items. In addition, the terms "connected" and "coupled" are not restricted to physical or mechanical connections or couplings, and can include electrical connections or couplings, whether direct or indirect.

Moreover, unless explicitly stated to the contrary, embodiments "comprising," "including," or "having" an element or a plurality of elements having a particular property may include additional such elements not having that property. The term "comprising" or "comprises" refers to a composition, compound, formulation, or method that is inclusive and does not exclude additional elements, components, and/or method steps. The term "comprising" also refers to a composition, compound, formulation, or method embodiment of the present disclosure that is inclusive and does not exclude additional elements, components, or method steps.

The phrase "consisting of" or "consists of" refers to a compound, composition, formulation, or method that excludes the presence of any additional elements, components, or method steps. The term "consisting of" also refers to a compound, composition, formulation, or method of the present disclosure that excludes the presence of any additional elements, components, or method steps.

The phrase "consisting essentially of" or "consists essentially of" refers to a composition, compound, formulation, or method that is inclusive of additional elements, components, or method steps that do not materially affect the characteristic(s) of the composition, compound, formulation, or method. The phrase "consisting essentially of" also refers to a composition, compound, formulation, or method of the present disclosure that is inclusive of additional elements, components, or method steps that do not materially affect the characteristic(s) of the composition, compound, formulation, or method steps.

Approximating language, as used herein throughout the specification and claims, may be applied to modify any quantitative representation that could permissibly vary without resulting in a change in the basic function to which it is related. Accordingly, a value modified by a term or terms, such as "about," and "substantially" is not to be limited to the precise value specified. In some instances, the approximating language may correspond to the precision of an instrument for measuring the value. Here and throughout the specification and claims, range limitations may be combined and/or interchanged. Such ranges are identified and include all the sub-ranges contained therein unless context or language indicates otherwise.

As used herein, the terms "may" and "may be" indicate a possibility of an occurrence within a set of circumstances; a possession of a specified property, characteristic or function; and/or qualify another verb by expressing one or more of an ability, capability, or possibility associated with the qualified verb. Accordingly, usage of "may" and "may be" indicates that a modified term is apparently appropriate, capable, or suitable for an indicated capacity, function, or usage, while taking into account that in some circumstances, the modified term may sometimes not be appropriate, capable, or suitable.

It is to be understood that the above description is intended to be illustrative, and not restrictive. For example, the above-described embodiments (and/or aspects thereof) may be used individually, together, or in combination with each other. In addition, many modifications may be made to adapt a particular situation or material to the teachings of the subject matter set forth herein without departing from its scope. While the dimensions and types of materials described herein are intended to define the parameters of the disclosed subject matter, they are by no means limiting and are exemple embodiments. Many other embodiments will be apparent to those of skill in the art upon reviewing the above description. The scope of the subject matter described herein should, therefore, be determined with reference to the appended claims, along with the full scope of equivalents to which such claims are entitled.

This written description uses examples to disclose several embodiments of the subject matter set forth herein, including the best mode, and also to enable a person of ordinary skill in the art to practice the embodiments of disclosed subject matter, including making and using the devices or systems and performing the methods. The patentable scope of the subject matter described herein is defined by the claims, and may include other examples that occur to those of ordinary skill in the art. Such other examples are intended to be within the scope of the claims if they have structural elements that do not differ from the literal language of the claims, or if they include equivalent structural elements with insubstantial differences from the literal languages of the claims.

While only certain features of the invention have been illustrated and described herein, many modifications and changes will occur to those skilled in the art. It is, therefore, to be understood that the appended claims are intended to cover all such modifications and changes as fall within the scope of the invention.

## Claims

1. A parallel configured system comprising:

    a plurality of fuel cell systems electrically connected in a parallel configuration,
    a switching device connected in series to each of the plurality of the fuel cell systems,
    an energy conversion device connected in series to each of the switching devices,
    a load connected to each of the energy conversion devices, and
    a control unit configured to determine an operation of the plurality of the fuel cell systems,

    wherein an electrical output of the plurality of the fuel cell systems is connected in parallel to the load through the switching devices and the energy conversion devices.

2. The parallel configured system of claim 1, wherein the load is a motor controller for an electric vehicle or an inverter for a stationary power application.

3. The parallel configured system of claim 1 or 2, wherein the switching device is a contactor, a MOSFET, an IGBT, or a bipolar junction transistor.

4. The parallel configured system of any preceding claim, wherein the energy conversion device is a DC-DC converter.

5. The parallel configured system of any preceding claim, wherein a ranking system for each of the plurality of the fuel cell systems is determined while each of the plurality of the fuel cell systems is not providing power, and the ranking system is used to determine a preferred order of connection and disconnection of each of the plurality of the fuel cell systems based on a weighted averaging scheme of one or more factors; optionally, wherein the one or more factors include availability of each of the plurality of the fuel cell systems, frequency of faults, alarms, or recoveries that the control unit has identified in each of the plurality of the fuel cell systems, or operating hours of each of the plurality of the fuel cell systems.

6. The parallel configured system of any preceding claim, wherein predefined power levels are identified for turning on and turning off each of the plurality of the fuel cell system based on a required power of the load; optionally, wherein the predefined power levels identified for turning on and turning off each of the plurality of the fuel cell systems are dynamically adjusted based on historical operating data of each of the plurality of the fuel cell systems.

7. The parallel configured system of any preceding claim, wherein the parallel configured system has a minimum power setting and a maximum power setting, and the operation of each of the plurality of the fuel cell systems is based on a range between the minimum power setting and the maximum power setting.

8. The parallel configured system of any preceding claim, wherein the parallel configured system further comprises an end system integrator implemented to determine which of the plurality of the fuel cell systems should be turned on; optionally, wherein the end system integrator models for any time delay incurred in turning on each of the plurality of the fuel cell systems.

9. A method for providing power to a load comprising:

implementing a plurality of fuel cell systems electrically connected in a parallel configuration,

connecting each of the plurality of the fuel cell systems to a switching device in series,
connecting each of the switching devices to an energy conversion device in series, connecting a load to each of the energy conversion devices, and
implementing a control unit to determine operation of the plurality of the fuel cell systems,

wherein an electrical output of the plurality of the fuel cell systems is connected in parallel to the load through the switching devices and the energy conversion devices.

10. The method of claim 9, wherein the load is a motor controller for an electric vehicle or an inverter for a stationary power application.

11. The method of claim 9 or 10, wherein the switching device is a contactor, a MOSFET, an IGBT, or a bipolar junction transistor.

12. The method of any of claims 9 to 11, wherein the energy conversion device is a DC-DC converter.

13. The method of any of claims 9 to 12, further comprising determining a ranking system for each of the plurality of the fuel cell systems while each of the plurality of the fuel cell systems is not providing power, and using the ranking system to determine a preferred order of connection and disconnection of each of the plurality of the fuel cell systems based on a weighted averaging scheme of one or more factors; optionally, wherein the one or more factors include an availability of each of the plurality of the fuel cell systems, frequency of faults, alarms, or recoveries that the control unit has identified in each of the plurality of the fuel cell systems, or operating hours of each of the plurality of the fuel cell systems.

14. The method of any of claims 9 to 13, further comprising identifying predefined power levels for turning on and turning off each of the plurality of the fuel cell system based on a required power of the load.

15. The method of any of claims 9 to 14, further comprising implementing an end system integrator to determine which of the plurality of the fuel cell systems should be turned on; and, optionally, using the end system integrator to model for any time delay incurred in turning on each of the plurality of the fuel cell systems.

*FIG. 1A*

EP 4 297 221 A1

*FIG. 1B*

CURRENT FLOW

*FIG. 1C*

EP 4 297 221 A1

*FIG. 1D*

FIG. 2

*FIG. 3*

EP 4 297 221 A1

410 — ALL SYSTEMS OFF: GENERATE SUBSYSTEM RANKING TABLE

420 — EVALUATION OF POWER REQUEST AGAINST SUBSYSTEM RANKING TABLE PLOAD " N*$P_{ON\_MIN}$

430 — N TOP RANKED SYSTEMS REQUEST TO BE ENABLED

*FIG. 4*

Europäisches
Patentamt

European
Patent Office

Office européen
des brevets

## EUROPEAN SEARCH REPORT

Application Number

EP 23 17 8262

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 3 957 515 A2 (HONDA MOTOR CO LTD [JP]) 23 February 2022 (2022-02-23) * paragraph [0009] - paragraph [0064]; figures 1-11 * | 1-15 | INV. H02J1/12 B60L58/30 |
| | ----- | | ADD. |
| X | US 2001/049038 A1 (DICKMAN ANTHONY J [US] ET AL) 6 December 2001 (2001-12-06) * paragraph [0047] - paragraph [0063]; figures 1-2,5-11 * | 1-15 | H01M8/24 |
| | ----- | | |
| A | US 11 201 339 B2 (PROTON MOTOR FUEL CELL GMBH [DE]) 14 December 2021 (2021-12-14) * column 4 - column 7; figure 1 * | 1-15 | |
| | ----- | | |

TECHNICAL FIELDS
SEARCHED (IPC)

H02J
H01M
B60L

The present search report has been drawn up for all claims

| Place of search | Date of completion of the search | Examiner |
|---|---|---|
| Munich | 8 November 2023 | Ossanna, Luca |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

...........................................................................

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 23 17 8262

This annex lists the patent family members relating to the patent documents cited in the above-mentioned European search report.
The members are as contained in the European Patent Office EDP file on
The European Patent Office is in no way liable for these particulars which are merely given for the purpose of information.

08-11-2023

| Patent document cited in search report | | Publication date | Patent family member(s) | | Publication date |
|---|---|---|---|---|---|
| EP 3957515 | A2 | 23-02-2022 | CN | 114079067 A | 22-02-2022 |
| | | | EP | 3957515 A2 | 23-02-2022 |
| | | | JP | 2022034394 A | 03-03-2022 |
| | | | US | 2022059855 A1 | 24-02-2022 |
| US 2001049038 | A1 | 06-12-2001 | AU | 4951301 A | 08-10-2001 |
| | | | BR | 0109569 A | 18-02-2003 |
| | | | CA | 2392881 A1 | 04-10-2001 |
| | | | EP | 1273061 A1 | 08-01-2003 |
| | | | HK | 1049550 A1 | 16-05-2003 |
| | | | JP | 3991115 B2 | 17-10-2007 |
| | | | JP | 2003529196 A | 30-09-2003 |
| | | | MX | PA02009375 A | 12-02-2003 |
| | | | US | 2001049038 A1 | 06-12-2001 |
| | | | US | 2005084726 A1 | 21-04-2005 |
| | | | WO | 0173879 A1 | 04-10-2001 |
| US 11201339 | B2 | 14-12-2021 | CA | 3035130 A1 | 01-02-2018 |
| | | | CN | 109845011 A | 04-06-2019 |
| | | | DE | 102016114081 A1 | 01-02-2018 |
| | | | DK | 3491693 T3 | 21-12-2020 |
| | | | EP | 3491693 A1 | 05-06-2019 |
| | | | JP | 7196062 B2 | 26-12-2022 |
| | | | JP | 2019522330 A | 08-08-2019 |
| | | | KR | 20190039544 A | 12-04-2019 |
| | | | US | 2019288311 A1 | 19-09-2019 |
| | | | WO | 2018020029 A1 | 01-02-2018 |

EPO FORM P0459

For more details about this annex : see Official Journal of the European Patent Office, No. 12/82